# EUROPÄISCHE PATENTSCHRIFT

(11) **EP 3 185 379 B1**
(45) Veröffentlichungstag und Bekanntmachung des Hinweises auf die Patenterteilung: **11.12.2019**
(21) Anmeldenummer: 16205411.8
(22) Anmeldetag: 20.12.2016
(51) Int. Cl.: H02G 3/22, H02G 3/08

(54) **KABELDURCHFÜHRUNGSVORRICHTUNG**
CABLE LEAD-THROUGH DEVICE
DISPOSITIF DE PASSAGE DE CÂBLE

(30) Priorität: 21.12.2015 DE 202015106975 U
(43) Veröffentlichungstag der Anmeldung: 28.06.2017
(73) Patentinhaber: Lapp Engineering & Co., 6330 Cham (CH)
(72) Erfinder: Drotleff, Rolf, 75392 Deckenpfronn (DE); Müller, Daniel, 71686 Remseck (DE)
(74) Vertreter: Hoeger, Stellrecht & Partner Patentanwälte mbB

(56) Entgegenhaltungen:
- EP-A1- 2 866 322
- WO-A1-2009/102262
- DE-A1-102014 208 291
- DE-U1-202008 007 905
- DE-U1-202010 007 695
- Murrplastik: "Kabeldurchführungsleiste", , 30. Juni 2014 (2014-06-30), XP055362314, Gefunden im Internet: URL:http://www.murrplastik.de/fileadmin/ME DIA/PDF/News/Kabeldurchfuehrungen/KDH_04-1 4_KDLE.pdf [gefunden am 2017-04-06]

## Beschreibung

Die Erfindung betrifft eine Kabeldurchführungsvorrichtung zur Durchführung eines oder mehrerer Kabel, einschließlich Leitungen, durch eine Trennwand, beispielsweise durch eine Gehäusewand im Eingangsbereich eines elektrischen Geräts oder eines Schaltschranks oder durch eine Gehäuseschale eines Steckverbinders.

Mittels einer Kabeldurchführungsvorrichtung soll die Trennfunktion der Trennwand vorzugsweise aufrechterhalten werden. An den Montagepositionen, an denen ein Kabel durch eine Öffnung in der Kabeldurchführungsvorrichtung hindurch geführt wird, soll die Öffnung abgedichtet werden, so dass entlang dem montierten Kabel keine Flüssigkeiten und/oder Gase durch die Trennwand in das elektrische Gerät oder den Steckverbinder eintreten können. Mittels der Kabeldurchführungsvorrichtung werden Kabel üblicherweise auch mechanisch fixiert, so dass sie beim Auftreten mechanischer Belastungen nicht von den Anschlusskontakten getrennt werden und eine so genannte Zugsentlastung realisiert wird.

Aus DE4310117A1 ist eine Kabeldurchführungsvorrichtung bekannt, bei der mehrere Kabel zwischen mehreren Lagen eines kompressiblen Materials hindurch geführt werden können. Auf die übereinander liegenden Lagen wird von einer Haltevorrichtung ein Druck ausgeübt, so dass die in Aussparungen zwischen den Lagen des kompressiblen Materials gelegenen Kabel mechanisch fixiert werden. Nachteilig hierbei ist, dass die Aussparungen sehr genau auf den Kabeldurchmesser abgestimmt werden müssen, da sonst die einzelnen Kabel nur ungenügend fixiert werden. Da die Druckverteilung nicht über die ganze Mehrfachdurchführung gleich ist, kann zudem die Stärke der Kabelklemmung variieren, so dass die Funktionen der Abdichtung und der Zugsentlastung bei einzelnen Kabeldurchführungen gegebenenfalls ungenügend ausgebildet sind. Die Qualität der Abdichtung und der Zugsentlastung, die mit dieser Kabeldurchführungsvorrichtung erzielt wird, erreicht somit nicht die Qualität, die mit einer Kabeldurchführungsvorrichtung erreicht werden kann, die der Durchführung nur eines Kabels dient.

Aus EP1710882A2 ist eine Kabeldurchführungsvorrichtung bekannt, die der Durchführung mehrerer Kabel dient, und die für jede der Kabeldurchführungen ein einzelnes Kabeldurchführungsmodul aufweist. Die einzelnen Kabeldurchführungsmodule, die zusammengefasst die Kabeldurchführungsvorrichtung bilden, weisen alle etwa dieselbe Qualität der Abdichtung und der Zugsentlastung auf. Nachteilig ist hingegen, dass die Montage der Kabel aufgrund der hohen Anzahl an Einzelteilen zeitintensiv und komplex wird. Zudem ist auch bei dieser Kabeldurchführungsvorrichtung die Packungsdichte limitiert, da die einzelnen Kabeldurchführungsmodule nicht beliebig klein ausgeführt werden können.

Aus der DE 10 2014 208 291 A und auch aus der WO 2009/102262 A1 ist eine Kabeldurchführung bekannt, welche die Merkmale des Oberbegriffs des Anspruchs 1 offenbart.

Der vorliegenden Erfindung liegt somit die Aufgabe zugrunde, eine einfach ausgestaltete und kostengünstig herstellbare Kabeldurchführungsvorrichtung zu schaffen.

Insbesondere ist eine Kabeldurchführungsvorrichtung zu schaffen, die es erlaubt, eines oder mehrere Kabel gut abgedichtet durch eine Trennwand hindurchzuführen.

Mittels der Kabeldurchführungsvorrichtung soll zudem eine Zugsentlastung vorteilhaft realisiert werden.

Kabel unterschiedlicher Durchmesser sollen mit einer hohen Packungsdichte und mit geringem Aufwand rasch in der Kabeldurchführungsvorrichtung montierbar sein.

Auch bei Leitungen mit unterschiedlichen Durchmessern sollen eine optimale Abdichtung und eine optimale Zugsentlastung gewährleistet sein.

Die Kabeldurchführungsvorrichtung soll zudem aus einer möglichst geringen Anzahl an Komponenten bestehen. Die Kabeldurchführungsvorrichtung soll die Trennfunktion der Trennwand, an der die Kabeldurchführungsvorrichtung installiert ist, optimal übernehmen, so dass die Trennfunktion unabhängig davon gewährleistet bleibt, ob Kabel installiert sind oder nicht.

Diese Aufgabe wird mit einer Kabeldurchführungsvorrichtung gelöst, welche die in Anspruch 1 angegebenen Merkmale aufweist. Vorteilhafte Ausgestaltungen der Erfindung sind in weiteren Ansprüchen angegeben.

Die Kabeldurchführungsvorrichtung, die zur abgedichteten Durchführung zumindest eines Kabels durch eine Öffnung in einer Gehäusewand, insbesondere der Gehäusewand eines elektrischen Schaltschranks, dient, umfasst einen Strukturrahmen und eine elastische Weichkomponente.

Der vorzugsweise aus einem formstabilen Kunststoff, speziell bevorzugt aus einem thermoplastischen Kunststoff, gefertigte Strukturrahmen weist zumindest eine Bohrung, vorzugsweise eine Vielzahl von Bohrungen, zur Durchführung eines Kabels auf. Zudem sind am Strukturrahmen ein oder mehrere Schraubenbohrungen angebracht, durch die Schrauben durchführbar sind, so dass der Strukturrahmen an eine Gehäusewand angeschraubt werden kann. Die elastische Weichkomponente weist zumindest eine Durchführstelle, vorzugsweise eine Vielzahl von Durchführstellen, auf, welche durch eine Durchstoßmembran verschlossen ist. Die eine oder mehrere Durchführstellen sind so auf der Weichkomponente positioniert, dass jeweils eine Bohrung im Strukturrahmen und eine Durchführstelle in der elastischen Weichkomponente zumindest annähernd konzentrisch angeordnet sind.

Erfindungsgemäß ist die Weichkomponente auf den - bei bestimmungsgemäßer Verschraubung mit einer Gehäusewand - von der Gehäusewand abgewandten Flächen großflächig durch den Strukturrahmen begrenzt. Zudem ragt die Weichkomponente senkrecht zur Gehäusewand teilweise aus dem Strukturrahmen heraus, wodurch sich zwischen den beiden Komponenten eine Höhendifferenz ergibt. Durch die Begrenzung durch den formstabilen Strukturrahmen wird die elastische Weichkomponente - auch bei mechanischer Beaufschlagung durch das Festschrauben an der Gehäusewand - in der ursprünglichen Form gehalten. Zudem wird bei einer mechanischen Beaufschlagung vorteilig der Bereich der Weichkomponente, welcher aus dem Strukturrahmen herausragt, beaufschlagt, so dass dieser zumindest teilweise komprimiert wird und eine gas- und/oder flüssigkeitsdichte Grenzfläche zwischen Gehäusewand und Kabeldurchführungsvorrichtung ausgebildet wird.

Erfindungsgemäß beträgt die Höhendifferenz zwischen Strukturrahmen und Weichkomponente vorzugsweise zwischen 0.5mm und 5mm, weiter bevorzugt zwischen 0.5mm und 2mm. Vorzugsweise ist die Höhendifferenz klein verglichen mit den übrigen Abmessungen der Kabeldurchführungsvorrichtung.

In einer bevorzugten Ausgestaltung ist die Weichkomponente stoffschlüssig mit dem Strukturrahmen verbunden. Der Endbenutzer muss somit bei einer Installation keine Einzelteile der Kabeldurchführungsvorrichtung zusammenfügen, wodurch der Installationsaufwand reduziert wird.

In einer weiteren bevorzugten Ausgestaltung ist die Weichkomponente aus einem Polyurethan-Gel oder aus einem Silikon-Gel oder Latex oder Gummi oder einer Mischung dieser Materialien gefertigt. Vorzugsweise wird die Weichkomponente durch Eingießen des Grundmaterials in den Strukturrahmen geformt. Hierzu kann auch eine temporäre Hilfsstruktur zur Formgebung am Strukturrahmen angebracht werden. Der Strukturrahmen wird vorzugsweise durch Spritzgießen oder durch ein additives Fertigungsverfahren gefertigt und ist vorzugsweise zumindest teilweise aus Polyamid gefertigt.

In einer weiteren besonders bevorzugten Ausgestaltung weist zumindest eine Durchführstelle in der Weichkomponente einen Verjüngungsabschnitt auf. Im Bereich des Verjüngungsabschnitts ist der Durchmesser der Durchführstelle im Vergleich zu den übrigen Bereichen deutlich reduziert. Vorzugsweise beträgt der Durchmesser im Bereich des Verjüngungsabschnitts maximal 60%, weiter bevorzugt maximal 50% des Durchmessers der Durchführstelle an der weitesten Stelle. Ein durch die Durchführstelle durchgeführtes Kabel wird im Bereich des Verjüngungsabschnitts durch die Elastizität der Weichkomponente mechanisch gehalten und die Durchführstelle gas- und/oder flüssigkeitsdicht abgedichtet. In einer besonders bevorzugten Ausgestaltung sind mehrere, zumindest zwei, Verjüngungsabschnitte entlang einer Durchführstelle angebracht.

Die Bohrungen im Strukturrahmen weisen bevorzugt unterschiedliche Durchmesser und/oder Formen auf, so dass Kabel mit unterschiedlichen Durchmessern und/oder Außenformen durch die Kabeldurchführungsvorrichtung durchgeführt werden können. Die Bohrungen können spezifisch auf den jeweiligen Anwendungsfall abgestimmt werden. Die Weichkomponente weist den Bohrungen im Strukturrahmen korrespondierende Durchführstellen auf, welche ebenfalls unterschiedliche Durchmesser und/oder Formen aufweisen.

Die Kabeldurchführungsvorrichtung ist über Schrauben, welche durch die Schraubenbohrungen im Strukturrahmen durchführbar sind, mit der Gehäusewand verschraubbar. Erfindungsgemäß sind auch andere Festlegemittel möglich, insbesondere Schnellverriegelungsmittel wie Schnappelemente. Beim Verschrauben (bzw. beim Befestigen mit anderen Festlegemitteln) der Kabeldurchführungsvorrichtung mit der Gehäusewand wird die Weichkomponente erfindungsgemäß mechanisch beaufschlagt und zumindest teilweise elastisch deformiert. Erfindungsgemäß wird durch diese Deformierung eine gas- und/oder flüssigkeitsdichte Grenzfläche zwischen Gehäusewand und Weichkomponente bzw. Kabeldurchführungsvorrichtung geformt.

Nachfolgend wird die Erfindung anhand von Zeichnungen näher erläutert. Dabei zeigt:
- Fig. 1: eine erfindungsgemäße Kabeldurchführungsvorrichtung 1 in einer Draufsicht;
- Fig. 2: die Kabeldurchführungsvorrichtung 1 in einer Schnittdarstellung entlang der in Figur 1 eingezeichneten Schnittlinie A--A;
- Fig. 3: den Teilbereich B aus Figur 2 der Kabeldurchführungsvorrichtung 1 in einer vergrößerten Ansicht;
- Fig. 4: einen Querschnitt durch eine Bohrung 21 im Strukturrahmen 2 und eine Durchführstelle 31 in der Weichkomponente 3 in einer vorzugsweisen Ausgestaltung;
- Fig. 5: einen Querschnitt durch eine Bohrung 21 im Strukturrahmen 2 und eine Durchführstelle 31 in der Weichkomponente 3 in einer weiteren vorzugsweisen Ausgestaltung;
- Fig. 6: einen Querschnitt durch eine Bohrung 21 im Strukturrahmen 2 und eine Durchführstelle 31 in der Weichkomponente 3 in einer dritten vorzugsweisen Ausgestaltung;
- Fig. 7: eine erfindungsgemäße Kabeldurchführungsvorrichtung 1 in einer bevorzugten Ausgestaltung an einer Gehäusewand 5;
- Fig. 8: eine erfindungsgemäße Kabeldurchführungsvorrichtung 1 an einer Gehäusewand 5 in einer Seitenansicht.

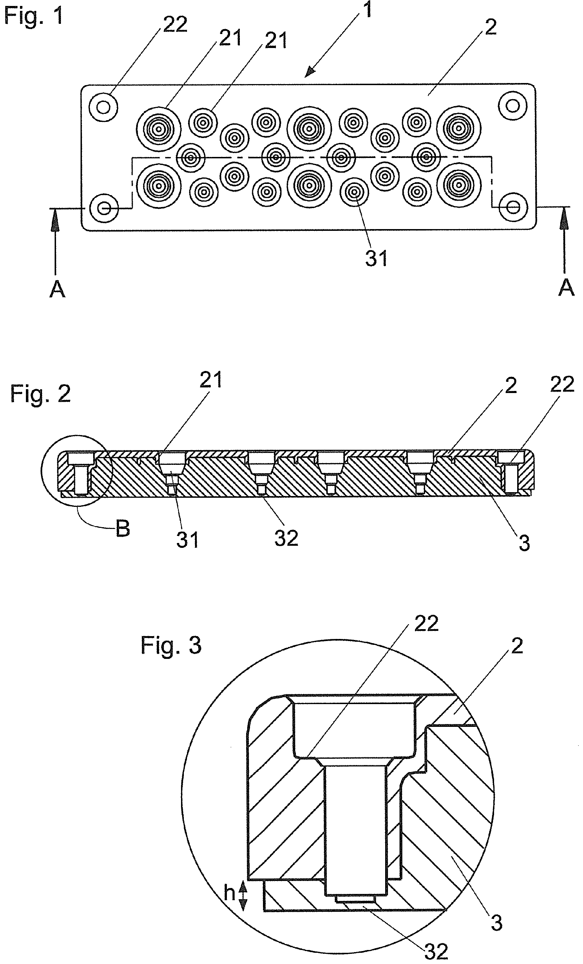

Figur 1 zeigt eine erfindungsgemäße Kabeldurchführungsvorrichtung 1 in einer bevorzugten Ausgestaltung in einer Draufsicht. Die Kabeldurchführungsvorrichtung 1 umfasst einen Strukturrahmen 2 mit Bohrungen 21 und Schraubenbohrungen 22. Die Bohrungen 21 sind zumindest annähernd konzentrisch zu Durchführstellen 31 in der unter dem Strukturrahmen liegenden Weichkomponente 3.

Figur 2 zeigt die Kabeldurchführung 1 aus Figur 1 geschnitten entlang A-A. Der Strukturrahmen 2 umgibt auf drei Seiten großflächig die Weichkomponente 3. Bohrungen 21 im Strukturrahmen sind jeweils konzentrisch zu Durchführstellen 31 in der Weichkomponente 3 angeordnet. Die Durchführstellen 31 sind jeweils durch zumindest eine Durchstoßmembran 32 verschlossen, so dass nicht mit Kabeln belegte Durchführstellen gas- und/oder flüssigkeitsdicht sind.

Figur 3 zeigt den Ausschnitt B aus Figur 2 in einer vergrößerten Ansicht. Die Weichkomponente 3 ragt um die Höhendifferenz h aus dem Strukturrahmen 2 hinaus. Die Schraubenbohrung 22 kann durch eine Durchstoßmembran 32 verschlossen oder durchgehend ausgeführt sein.

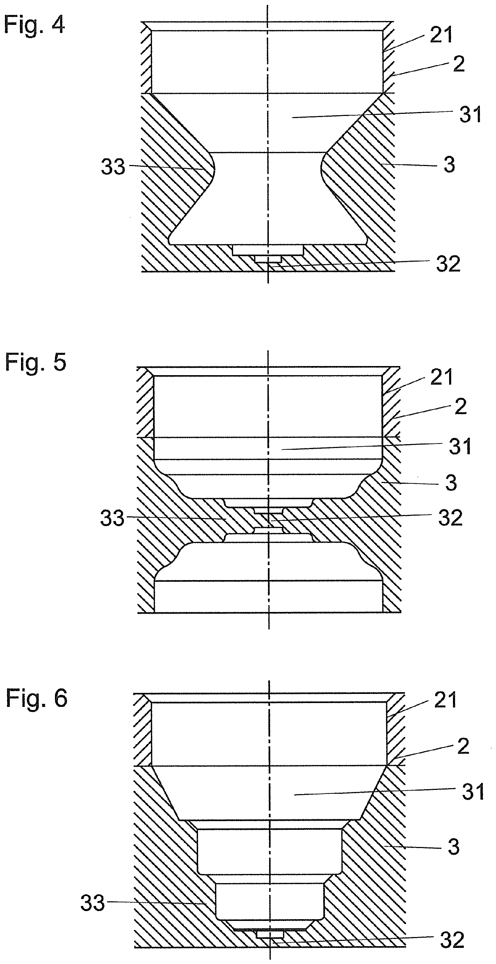

Figur 4 zeigt einen Querschnitt durch eine Bohrung 21 im Strukturrahmen 2 und eine korrespondierende Durchführstelle 31 in der Weichkomponente 3 der erfindungsgemäßen Kabeldurchführungsvorrichtung 1. Die Durchführstelle 31 ist durch eine Durchstoßmembran 32 verschlossen, so dass die Durchführstelle gas- und/oder flüssigkeitsdicht ist. Entlang der Durchführstelle 31 ist ein Verjüngungsabschnitt 33 angeordnet. Im Bereich des Verjüngungsabschnitts 33 ist der Durchmesser reduziert, so dass durchgeführte Kabel optimal gehalten werden.

Figur 5 zeigt einen Querschnitt durch eine Bohrung 21 im Strukturrahmen 2 und eine korrespondierende Durchführstelle 31 in der Weichkomponente 3 der erfindungsgemäßen Kabeldurchführungsvorrichtung 1 in einer weiteren Ausgestaltung. Entlang der Durchführstelle 31 ist ein Verjüngungsabschnitt 33 angeordnet, welcher durch eine Durchstoßmembran 32 verschlossen wird.

Figur 6 zeigt einen Querschnitt durch eine Bohrung 21 im Strukturrahmen 2 und eine korrespondierende Durchführstelle 31 in der Weichkomponente 3 der erfindungsgemäßen Kabeldurchführungsvorrichtung 1 in einer weiteren bevorzugten Ausgestaltung. Die Durchführstelle 31 geht stufenweise in einen Verjüngungsabschnitt 33 über und ist durch eine Durchstoßmembran 32 verschlossen.

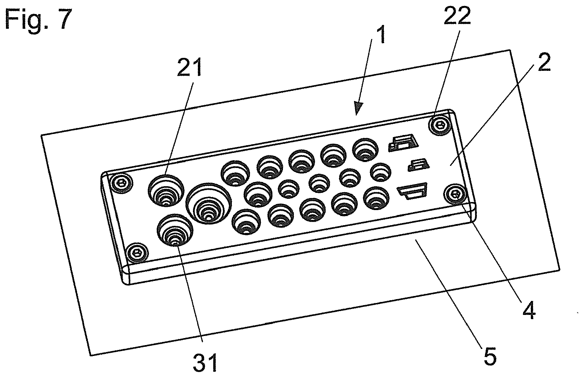

Figur 7 zeigt eine erfindungsgemäße Kabeldurchführungsvorrichtung 1 in einer weiteren bevorzugten Ausgestaltung mit den aus den Figuren 1 bis 6 bekannten Elementen, welche mit einer Gehäusewand 5 durch Schrauben 4 verschraubt ist. Die Kabeldurchführungsvorrichtung weist Bohrungen 21 mit unterschiedlichen Durchmessern und Formen auf.

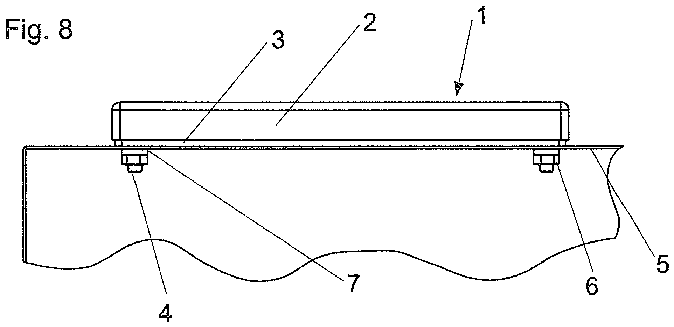

Figur 8 zeigt eine erfindungsgemäße Kabeldurchführungsvorrichtung 1, welche durch Schrauben 4 und korrespondierende Muttern 6 mit einer Gehäusewand 5 verschraubt ist, in einer Seitenansicht. Vorzugsweise sind unter den Muttern 6 Unterlagscheiben 7 angeordnet. Der Strukturrahmen 2 umgibt die Weichkomponente 3 auf den von der Gehäusewand 5 abgewandten Seiten großflächig.

### Bezugszeichenliste

- 1: Kabeldurchführungsvorrichtung
- 2: Strukturrahmen
- 21: Bohrung
- 22: Schraubenbohrung
- 3: Weichkomponente
- 31: Durchführstelle
- 32: Durchstoßmembran
- 33: Verjüngungsabschnitt
- 4: Schraube
- 5: Gehäusewand
- 6: Mutter
- 7: Unterlagscheibe
- h: Höhendifferenz

## Patentansprüche

1. Kabeldurchführungsvorrichtung (1), zur abgedichteten Durchführung zumindest eines Kabels durch eine Öffnung in einer Gehäusewand (5), mit einem Strukturrahmen (2), welcher zumindest eine Bohrung (21) zur Durchführung eines Kabels und zumindest eine Schraubenbohrung (22) umfasst, und einer elastischen Weichkomponente (3), welche zumindest eine Durchführstelle (31), welche durch eine Durchstoßmembran (32) verschlossen ist, umfasst, wobei die zumindest eine Bohrung (21) zumindest annähernd konzentrisch zu der zumindest einen Durchführstelle (31) angeordnet ist, wobei die Weichkomponente (3) auf den von der Gehäusewand (5) abgewandten Flächen großflächig durch den Strukturrahmen (2) begrenzt wird und senkrecht zur Gehäusewand (5) um die Höhendifferenz (h) aus dem Strukturrahmen herausragt,
**dadurch gekennzeichnet , dass** die Weichkomponente (3) beim Verschrauben der Schrauben (4) mit der Gehäusewand (5) zumindest teilweise elastisch deformiert wird und eine Gas- und/oder flüssigkeitsdichte Grenzfläche zur Gehäusewand (5) formt, und dass die Höhendifferenz (h) zwischen 0.5 mm und 5 mm beträgt.

2. Kabeldurchführungsvorrichtung (1) nach Anspruch 1, **dadurch gekennzeichnet, dass** die Höhendifferenz (h) zwischen 0.5 mm und 2 mm beträgt.

3. Kabeldurchführungsvorrichtung (1) nach Anspruch 1 oder 2, **dadurch gekennzeichnet, dass** die Weichkomponente (3) stoffschlüssig mit dem Strukturrahmen (2) verbunden ist.

4. Kabeldurchführungsvorrichtung (1) nach einem der Ansprüche 1 bis 3, **dadurch gekennzeichnet, dass** die Weichkomponente (3) aus einem Polyurethan-Gel oder einem Silikon-Gel oder Latex oder Gummi gefertigt ist.

5. Kabeldurchführungsvorrichtung (1) nach einem der Ansprüche 1 bis 4, **dadurch gekennzeichnet, dass** der Strukturrahmen zumindest teilweise aus Polyamid gefertigt ist.

6. Kabeldurchführungsvorrichtung (1) nach einem der Ansprüche 1 bis 5, **dadurch gekennzeichnet, dass** zumindest eine Durchführstelle (31) einen Verjüngungsabschnitt (33) aufweist.

7. Kabeldurchführungsvorrichtung (1) nach Anspruch 6, **dadurch gekennzeichnet, dass** der Verjüngungsabschnitt (33) an seiner engsten Stelle einen Durchmesser von maximal 60%, vorzugsweise maximal 50%, des Durchmessers der Durchführstelle (31) an der weitesten Stelle, aufweist.

8. Kabeldurchführungsvorrichtung (1) nach einem der Ansprüche 1 bis 7, **dadurch gekennzeichnet, dass** der Strukturrahmen (2) Bohrungen (22) mit unterschiedlichen Durchmessern und Formen, zur Durchführung von Kabeln mit unterschiedlichen Durchmessern und Formen, aufweist und dass die Weichkomponente (3) korrespondierende Durchführstellen (31) mit unterschiedlichen Durchmessern und Formen aufweist.

9. Kabeldurchführungsvorrichtung (1) nach einem der Ansprüche 1 bis 8, **dadurch gekennzeichnet, dass** durch die Schraubenbohrungen (22) Schrauben (4), zur Verschraubung mit einer Gehäusewand (5), durchführbar sind.

10. Kabeldurchführungsvorrichtung (1) nach einem der Ansprüche 1 bis 9, **dadurch gekennzeichnet, dass** die Weichkomponente (3) beim Verschrauben der Schrauben (4) mit der Gehäusewand (5) mechanisch beaufschlagt wird.

## Claims

1. Cable feedthrough device (1) for feeding at least one cable through an opening in a housing wall (5) in a sealed manner, comprising a structural frame (2) with at least one hole (21) for feeding through a cable and at least one screw hole (22), and an elastic flexible component (3) comprising at least one feedthrough section (31) closed by a piercable membrane (32), wherein the at least one hole (21) is arranged at least approximately concentric to the at least one feedthrough section (31), wherein the flexible component (3) is limited by the structural frame (2) over a large area on the surfaces facing away from the housing wall (5) and protrudes out of the structural frame at right angles to the housing wall (5) by the difference in height (h),
**characterized in that** the flexible component (3) is deformed elastically at least partially when the screws (4) are screwed into the housing wall (5) and forms a gastight and/or liquid-tight interface relative to the housing wall (5), and that the difference in height (h) is between 0.5 mm and 5 mm.

2. Cable feedthrough device (1) as defined in claim 1, **characterized in that** the difference in height (h) is between 0.5 mm and 2 mm.

3. Cable feedthrough device (1) as defined in claim 1 or 2, **characterized in that** the flexible component (3) is connected to the structural frame in a material locking manner.

4. Cable feedthrough device (1) as defined in any one of claims 1 to 3, **characterized in that** the flexible component (3) is produced from a polyurethane gel or a silicone gel or latex or rubber.

5. Cable feedthrough device (1) as defined in any one of claims 1 to 4, **characterized in that** the structural frame is produced at least partially from polyamide.

6. Cable feedthrough device (1) as defined in any one of claims 1 to 5, **characterized in that** at least one feedthrough section (31) has a tapered segment (33).

7. Cable feedthrough device (1) as defined in claim 6, **characterized in that** the tapered segment (33) has at its narrowest point a diameter of at the most 60 %, preferably at the most 50 %, of the diameter of the feedthrough section (31) at the broadest point.

8. Cable feedthrough device (1) as defined in any one of claims 1 to 7, **characterized in that** the structural frame (2) has holes (22) with different diameters and shapes for feeding through cables with different diameters and shapes, and that the flexible component (3) has corresponding feedthrough sections (31) with different diameters and shapes.

9. Cable feedthrough device (1) as defined in any one of claims 1 to 8, **characterized in that** screws (4) are guidable through the screw holes (22) for screwing them into a housing wall (5).

10. Cable feedthrough device (1) as defined in any one of claims 1 to 9, **characterized in that** the flexible component (3) is acted upon mechanically when the screws (4) are screwed into the housing wall (5).

## Revendications

1. Dispositif de passage de câble (1), pour le passage étanchéifié d'au moins un câble à travers une ouverture dans une paroi de logement (5), avec un cadre structural (2), lequel comprend au moins un trou (21) pour le passage d'un câble et au moins un trou de vis (22), et un élément souple (3) élastique, lequel comprend au moins un point de passage (31), lequel est fermé par une membrane traversante (32), dans lequel le au moins un trou (21) est disposé de manière au moins à peu près concentrique par rapport au au moins un point de passage (31), dans lequel l'élément souple (3) est délimité sur une grande superficie, sur les surfaces opposées à la paroi de logement (5), par le cadre structural (2) et fait saillie du cadre structural de la différence de hauteur (h) perpendiculairement à la paroi de logement (5),
**caractérisé en ce que** l'élément souple (3), lors du vissage des vis (4) avec la paroi de logement (5), est déformé au moins en partie de manière élastique et forme une surface limite étanche au gaz et/ou au liquide par rapport à la paroi de logement (5), et **en ce que** la différence de hauteur (h) est comprise entre 0,5 mm et 5 mm.

2. Dispositif de passage de câble (1) selon la revendication 1, **caractérisé en ce que** la différence de hauteur (h) est comprise entre 0,5 mm et 2 mm.

3. Dispositif de passage de câble (1) selon la revendication 1 ou 2, **caractérisé en ce que** l'élément souple (3) est relié au cadre structural (2) par liaison de matières.

4. Dispositif de passage de câble (1) selon l'une quelconque des revendications 1 à 3, **caractérisé en ce que** l'élément souple (3) est fabriqué à partir d'un gel de polyuréthane ou d'un gel de silicone ou de latex ou de caoutchouc.

5. Dispositif de passage de câble (1) selon l'une quelconque des revendications 1 à 4, **caractérisé en ce que** le cadre structural est fabriqué au moins en partie à partir de polyamide.

6. Dispositif de passage de câble (1) selon l'une quelconque des revendications 1 à 5, **caractérisé en ce qu'**au moins un point de passage (31) présente une partie de rétrécissement (33).

7. Dispositif de passage de câble (1) selon la revendication 6, **caractérisé en ce que** la partie de rétrécissement (33) présente au niveau de son point le plus étroit un diamètre d'au maximum 60 %, de préférence d'au maximum 50 %, du diamètre du point de passage (31) au point le plus large.

8. Dispositif de passage de câble (1) selon l'une quelconque des revendications 1 à 7, **caractérisé en ce que** le cadre structural (2) présente des trous (22) avec des diamètres et formes différents, pour le passage de câbles avec différents diamètres et formes, et **en ce que** l'élément souple (3) présente des points de passage (31) correspondants avec des diamètres et formes différents.

9. Dispositif de passage de câble (1) selon l'une quelconque des revendications 1 à 8, **caractérisé en ce que** des vis (4), pour le vissage à une paroi de logement (5), peuvent être guidées à travers les trous de vis (22).

10. Dispositif de passage de câble (1) selon l'une quelconque des revendications 1 à 9, **caractérisé en ce que** l'élément souple (3) est sollicité mécaniquement, lors du vissage des vis (4) avec la paroi de logement (5) .
